# FASCICULE DE BREVET EUROPEEN

(11) **EP 0 860 268 B1**
(45) Date de publication et mention de la délivrance du brevet: **16.01.2002**
(21) Numéro de dépôt: 98400380.6
(22) Date de dépôt: 18.02.1998
(51) Int. Cl.: B29C 70/44, B29C 43/12

(54) **Procédé de moulage en vessie avec conformateur de pièces minces en matériau composite**
Verfahren zum Vakuumformen von dünnen Verbundgegenständen unter Verwendung eines Formgebungselements
Process for vacuum bagging thin composite articles using a shaping element

(30) Priorité: 20.02.1997 FR 9701996
(43) Date de publication de la demande: 26.08.1998
(73) Titulaire: Snecma Moteurs, 75015 Paris (FR)
(72) Inventeur: Henrio, Philippe, 91090 Lisses (FR)
(74) Mandataire: Berrou, Paul

(56) Documents cités:
- WO-A-91/08885
- FR-A- 2 667 013
- GB-A- 2 066 144
- GB-A- 2 184 053
- GB-A- 2 316 036
- US-A- 4 824 631
- PATENT ABSTRACTS OF JAPAN vol. 009, no. 300 (M-433), 27 novembre 1985 & JP 60 139433 A (TOSHIBA KK), 24 juillet 1985,
- MUSCH G ET AL: "TOOLING WITH REINFORCED ELASTOMERIC MATERIALS" COMPOSITES MANUFACTURING, vol. 3, no. 2, 1 janvier 1992, pages 101-111, XP000300776

## Description

L'invention se rapporte aux procédés de moulage dits "au sac" de pièces minces en matériau composite constitué de nappes de fibres de renfort noyées dans une matrice de résine à polymériser, et plus particulièrement à un procédé de moulage selon le préambule de la revendication 1, utilisant un conformateur pour façonner les angles de telles pièces.

Un tel procédé est connu du document GB-A-2 184 053.

Le procédé de moulage dit "en sac" ou "en vessie" est bien connu de l'homme du métier et utilisé pour mouler des pièces constituées de parois minces en matériau composite fibre-résine polymérisable. Ce procédé utilise un moule ouvert présentant une surface de moulage a la forme de la pièce à réaliser. On dispose sur la surface de moulage des nappes de fibres imprégnées de résine polymérisables, on recouvre ces nappes de fibres par d'éventuels tissus conjonctifs et par une vessie ou "sac" étanche par rapport au moule, on applique sur la vessie une pression d'air isostatique et on soumet l'ensemble à un cycle de polymérisation qui s'effectue généralement à chaud.

La pièce peut comporter des angles saillants au sommet arrondi. Afin de former correctement ces arrondis on dispose un conformateur entre la pièce et la vessie, contre la surface concave de l'arrondi. Un conformateur est un corps solide se présentant habituellement comme un barreau et comportant une surface de formage appliquée contre la surface concave de la pièce, dans le creux de l'arrondi à former et au voisinage de celui-ci, cette surface de formage étant de forme complémentaire à la surface concave de la pièce, c'est à dire convexe et comportant un sommet arrondi prolongé de part et d'autre par des flancs, ce conformateur comportant aussi une surface exposée à la pression d'air et opposée à la surface de formage. Sous l'effet de la pression d'air, le conformateur repousse les nappes de fibre imprégnées de résine contre la surface de moulage et permet ainsi de former correctement l'arrondi dans l'angle de la pièce.

L'inconvénient du procédé est que les bords du conformateur marquent la pièce et provoquent sur cette pièce des inégalités brutales épaisseur qui en réduisent la résistance. Cet inconvénient est particulièrement grave en aéronautique, car les pièces sont très sollicitées et ont souvent des profils imposés avec de faibles tolérances.

Pour remédier à celà, on utilise des conformateurs en élastomère souple avec des bords en biseau effilé. Les inégalités d'épaisseur sont effectivement réduites, mais non supprimées. De plus, les résines à haute résistance exigeant une température de polymérisation élevée, de tels conformateurs sont rapidement dégradés par la chaleur et doivent être renouvelés fréquemment. Enfin, ces conformateurs sont difficiles à positionner dans l'angle de la pièce. Ceci provient de la surface importante qu'ils présentent au contact de la pièce et du foisonnement avant compression des fibres ou des nappes de tissu.

Pour résoudre ce problème, l'invention propose de donner à la face du conformateur exposé à la pression un profil convexe dont les normales passent par le sommet arrondi de formage du conformateur. Un tel profil a pour effet de faire converger les forces de pression sur le sommet de formage du conformateur. Les forces de pression ne génèrent plus de résultantes au voisinage des bords du conformateur, ces résultantes tendant à faire basculer le conformateur. De ce fait, les bords du conformateur ne tendent plus à pénétrer dans la matière composite à l'état plastique, ce qui évite les ruptures brutales de l'épaisseur de la pièce. Le profil convexe de la face du conformateur exposé à la pression a aussi pour effet de supprimer l'effort de traction de la vessie sur le conformateur, ce qui supprime la tendance à le faire basculer et à l'enfoncer d'avantage.

Un autre avantage de l'invention est que le conformateur se positionne automatiquement dans l'angle de la pièce.

On comprend qu'un tel résultat est obtenu par la géométrie particulière du conformateur. Avantageusement, on réalisera le conformateur avec un matériau résistant à la température de polymérisation de la résine, par exemple un alliage métallique rigide tel un acier ou un alliage d'aluminium. Le conformateur ne se dégrade plus et peut en conséquence être réutilisé indéfiniment.

Dans un mode particulier de réalisation de l'invention, la face du conformateur exposée à la pression isostatique a un profil en arc de cercle centré sensiblement sur le sommet de l'angle formé par les flancs de formage du conformateur, un tel profil étant d'une réalisation simplifiée.

L'invention sera mieux comprise et les avantages qu'elle procure apparaitront plus clairement au vu d'un bref rappel du procédé de moulage selon l'art antérieur, d'un exemple détaillé de mise en oeuvre du procédé selon l'invention ainsi que des figures annexées.

La figure 1 illustre l'emploi d'un conformateur selon le procédé de l'art antérieur.

La figure 2 illustre l'emploi d'un conformateur selon le procédé objet de l'invention.

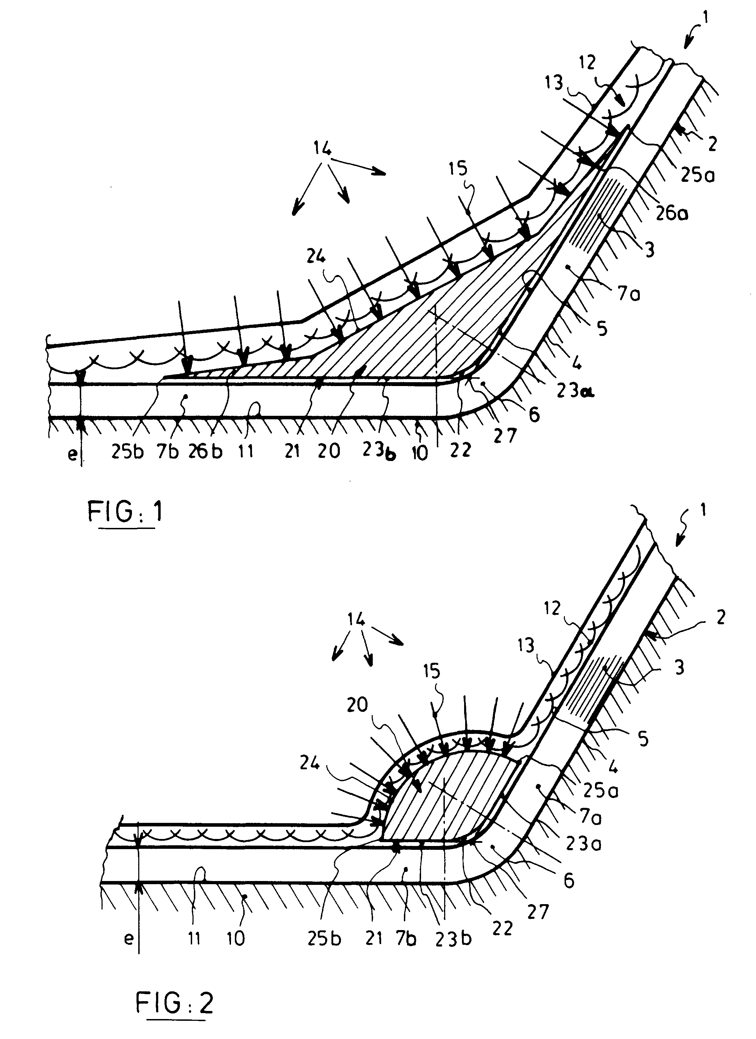

On se reportera en premier lieu à la figure 1. La pièce 1 à réaliser comporte une paroi mince 2 constituée de nappes de fibres 3 noyée dans une résine non référencée, cette résine étant polymérisable habituellement à chaud. Cette pièce 1 forme un angle, de sorte qu'un côté 4 de la paroi 2 est une surface convexe alors que son côté opposé 5 est une surface concave. La paroi mince 2 comporte un sommet arrondi 6 sensiblement en arc de cercle, cet arrondi 6 étant prolongé de part et d'autre par des flancs 7a et 7b sensiblement plans, au moins dans le voisinage de l'arrondi 6, lesdits flancs 7a, 7b se raccordant en conséquence par le sommet arrondi 6.

La pièce 1 est obtenue à l'aide d'un moule 10 dont la surface de moulage 11 a une forme complémentaire à celle de la surface convexe 4 de la pièce 1 à réaliser. Pour se faire, on applique les nappes de fibre 3 imprégnées de résine contre la surface de moulage 11, on recouvre les nappes de fibres 3 imprégnées par différents tissus conjonctifs 12 bien connus de l'homme du métier, ainsi que par une vessie ou "sac" 13 étanché par rapport au moule 10, et on applique sur la vessie 13 une pression d'air 14 isostatique qui génère sur la vessie 13 des forces de pression 15 normales, c'est à dire perpendiculaires à la vessie 13. Cette pression d'air 14 a pour effet de plaquer les nappes de fibres 3 imprégnées contre la surface de moulage 11, ainsi que de densifier les nappes de fibres 3 imprégnées, cette densification entrainant une réduction de l'épaisseur e de la pièce 1 de 20 à 30%. La pression d'air 14 étant maintenue, on polymérise la résine le plus souvent à chaud.

Afin de former correctement l'arrondi 6 de la pièce 1, il est nécessaire d'intercaler un conformateur 20 entre la pièce 1 et la vessie 13, sous les - tissus conjonctifs 12. Ce conformateur 20 a une surface de formage 21 de forme complémentaire à la surface concave 5 dans l'angle de la pièce 1, cette surface de formage 21 comportant en conséquence un arrondi de formage 22 prolongé de part et d'autre par des flancs de formage 23a et 23b. Le conformateur comporte aussi une surface 24 exposée à la pression d'air 14 et opposée à la surface de formage 21. La surface de formage 21 et la surface exposée à la pression 24 se rejoignent sur les bords 25a et 25b du conformateur 1. Ainsi, sous l'effet de la pression d'air 14, le conformateur 20 s'enfonce comme un coin dans les nappes de fibres imprégnées 3 au niveau de l'arrondi 6 de la pièce 1 et des flancs 7a et 7b prolongeant cet arrondi 6, ce qui permet de donner à cet arrondi 6 et aux flancs 7a et 7b, dans son voisinage, la forme désirée.

Cependant, sous l'effet des forces de pression 15 s'appliquant au voisinage des bords 25a et 25b du conformateur, ce conformateur 1 tend à s'ouvrir et/ou à basculer, et ses bords 25a ou 25b tendent de ce fait à pénétrer dans la pièce 1 et à y former des marques. On remédie à cet inconvénient en donnant à la surface exposée à la pression 24 une forme concave et en prolongeant les bords 25 a et 25b du conformateur 20 par des ailes 26a et 26b en biseau très effilé, le conformateur 1 étant lui-même réalisé en élastomère souple. Cette disposition réduit les marques sur la pièce, mais sans les supprimer. De plus, du fait de la matière utilisée, un tel conformateur est rapidement détruit par l'élévation de la température nécessaire à la polymérisation de la pièce 1.

On se reportera maintenant à la figure 2. La description qui précède s'applique en tous points à l'exception des éléments suivants qui sont propres à l'invention. Dans cet exemple de mise en oeuvre du procédé faisant l'objet de l'invention, on utilise un conformateur 20 dont la surface exposée à la pression 24 a un profil en arc de cercle convexe centré sur le sommet 27 de l'angle formé par les flancs de formage 23a et 23b. Ainsi, les forces de pression 15 convergent sur ce sommet 27 et ne provoquent plus le basculement du conformateur 1. Ce conformateur 1 est en aluminium et peut être réutilisé indéfiniment.

## Revendications

1. Procédé de moulage en vessie avec conformateur de pièces minces en matériau composite avec conformateur, ladite pièce (1) formant un angle constitué d'une paroi mince (2) comportant deux flancs (7a, 7b) se raccordant entre eux par un sommet arrondi (6), ladite paroi mince (2) ayant une surface convexe (4) et une surface concave (5), ledit matériau étant composé de nappes de fibres (3) noyées dans une résine, ledit procédé utilisant un moule (10) à la forme de ladite surface convexe (4) ainsi qu'un conformateur (20), ledit conformateur (20) comportant une surface de formage (21) à la forme de ladite surface concave (5) dans l'angle de la pièce (1), ladite surface de formage (21) comportant un sommet arrondi de formage (22) prolongé de part et d'autre par deux flancs de formage (23a, 23b) formant un angle de sommet (27), ainsi qu'une surface (24) exposée à une pression d'air isostatique (14) par l'intermédiaire d'une vessie (13), ladite pression d'air isostatique (14) produisant sur la surface exposée à la pression (24) des forces de pression (15), **caractérisé en ce que** la surface exposée à la pression (24) du conformateur (20) est convexe et **en ce que** les normales à ladite surface (24) passent par le sommet arrondi de formage (22) du conformateur (20), afin de faire converger sur ledit sommet arrondi de formage (22) les forces de pression (15).

2. Procédé selon la revendication 1, **caractérisé en ce que** le conformateur (20) est en alliage métallique rigide.

3. Procédé selon la revendication 1 ou 2, **caractérisé en ce que** la surface exposée à la pression (24) a un profil en arc de cercle centré sur le sommet (27) de l'angle formé par les flancs de formage (23a, 23b).

## Patentansprüche

1. Verfahren zum Vakuumformen von dünnen Werkstücken aus Verbundmaterial unter Verwendung eines Formgebungselements, wobei dieses Werkstück (1) einen Winkel aufweist, der von einer dünnen Wand (2) gebildet wird, die zwei Seitenflächen (7a, 7b) aufweist, die miteinander durch eine abgerundete Spitze (6) verbunden sind, wobei die dünne Wand (2) eine konvexe Fläche (4) und eine konkave Fläche (5) besitzt, wobei das Material aus Fasergeweben (3) besteht, die in ein Harz eingesenkt sind, wobei bei dem genannten Verfahren eine Form (10) mit der Form dieser konvexen Fläche (4) sowie ein Formgebungselement (20) verwendet werden, wobei dieses Formgebungselement (20) eine Formungsfläche (21) mit der Form dieser konkaven Fläche (5) in dem Winkel des Werkstücks (1) aufweist, wobei diese Formungsfläche (21) aus einer abgerundeten Formungsspitze (22) besteht, die sich nach beiden Seiten in zwei Formungs-Seitenflächen (23a, 23b) fortsetzt, welche einen Spitzenwinkel (27) bilden, sowie eine Oberfläche (24) aufweist, die mittels eines Vakuumsacks (13) einem isostatischen Luftdruck (14) ausgesetzt wird, wobei dieser isostatische Luftdruck (14) auf der dem Druck ausgesetzten Oberfläche (24) Druckkräfte (15) erzeugt,
**dadurch gekennzeichnet,**
**dass** die dem Druck ausgesetzte Oberfläche (24) des Formgebungselements (20) konvex ist und dass die Normalen auf dieser Oberfläche (24) durch die abgerundete Formungsspitze (22) des Formgebungselements (20) verlaufen, so dass dadurch bewirkt wird, dass die Druckkräfte (15) zu der abgerundeten Formungsspitze (22) konvergieren.

2. Verfahren nach Anspruch 1,
**dadurch gekennzeichnet, dass** das Formgebungselement (20) aus einer starren Metalllegierung besteht.

3. Verfahren nach Anspruch 1 oder 2,
**dadurch gekennzeichnet, dass** die dem Druck ausgesetzte Oberfläche (24) ein kreisbogenförmiges Profil hat, das auf die Spitze (27) des Winkels, der von den Formungs-Seitenflächen (23a, 23b) gebildet wird, zentriert ist.

## Claims

1. A bladder moulding process for producing thin articles made of a composite material by means of a former, said article (1) having an angle defined by the joining together consisting of two flanks (7a, 7b) of a thin wall (2) in a rounded apex (6), said thin wall (2) having a convex surface (4) and a concave surface (5), said material consisting of layers of fibres (3) embedded in a resin, the process using a mould (10), corresponding to the shape of said convex surface (4) and a former (20), said former (20) having a forming surface (21) corresponding to the shape of said concave surface (5) in the angle of the article (1), said forming surface (21) comprising a rounded forming apex (22) prolonged on either side by two forming flanks (23a, 23b) forming an apex angle (27), and a surface (24) subjected to an isostatic air pressure (14) by way of a bladder (13), said isostatic air pressure (14) producing pressure forces (15 on the pressure-receiving surface (24), **characterised in that** said pressure-receiving surface (24) of the former (20) is convex and **in that** the perpendiculars to said surface (24) extend through the rounded forming apex (22) of the former (20) in order to make the pressure forces(15) converge on said rounded forming apex (22).

2. A process according to claim 1, **characterised in that** the former (20) is made of a rigid metal alloy.

3. A process according to claim 1 or claim 2, **characterised in that** the pressure-experiencing surface (24) has a profile in the form of an arc of a circle centred on the apex (27) of the angle formed by the forming flanks (23a, 23b).
